# EUROPEAN PATENT SPECIFICATION

(11) **EP 3 100 849 B1**
(45) Date of publication and mention of the grant of the patent: **09.05.2018**
(21) Application number: 16158693.8
(22) Date of filing: 04.03.2016
(51) Int. Cl.: B29D 99/00, B32B 37/06

(54) **COMPOSITE TEXTILE AND METHOD OF PRODUCING SAME**
VERBUNDTEXTIL UND DESSEN HERSTELLUNG
TEXTILE COMPOSITE ET SON PROCÉDÉ DE PRODUCTION

(43) Date of publication of application: 07.12.2016
(60) Divisional application: 18150068.7
(73) Proprietor: Top Express Holding Limited, Taipei City (TW)
(72) Inventor: CHU, Chien-Chia, Taipei City (TW)
(74) Representative: Viering, Jentschura & Partner mbB Patent- und Rechtsanwälte

(56) References cited:
- US-A1- 2003 194 547
- US-A1- 2009 133 802
- US-A1- 2013 171 432
- US-B1- 8 506 749

## Description

The present invention relates to a method of textile surface processing, especially to the method of producing a composite textile by combining a fabric layer with a membrane layer. With the process of textile technology, functions in strength and water-proofing of a textile can be enhanced by surface processing with polymer materials such as coating processing or adhesive film processing.

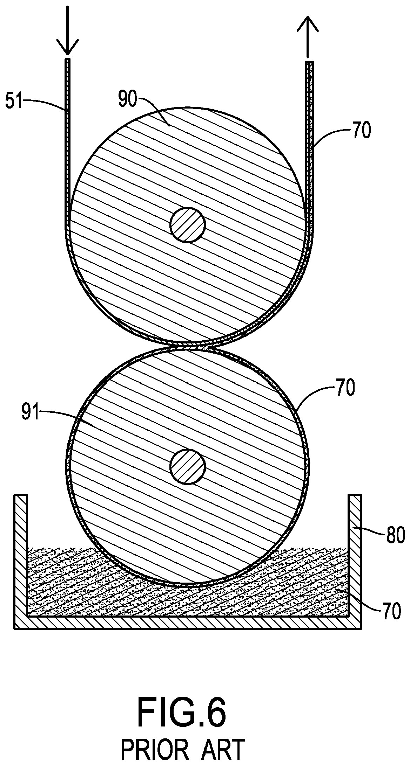

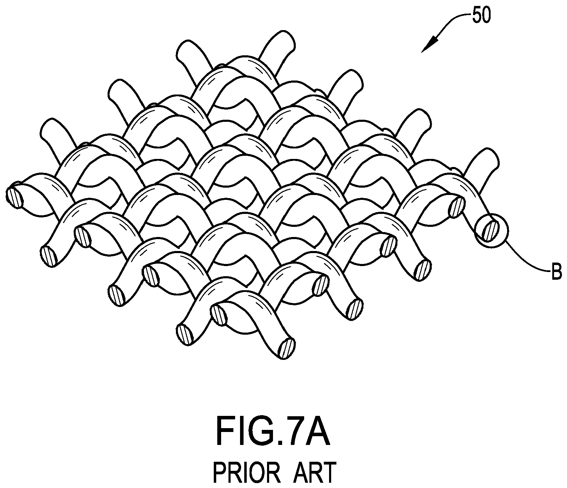

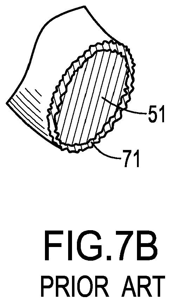

With reference to Figs. 6 and 7, a conventional coating processing method comprises: placing a polymer-coating solution 70 in a tank 80, wherein the polymer-coating solution 70 is prepared by dissolving the polymers in an organic solvent; delivering a textile 51 with a delivery roller 90, and carrying the polymer-coating solution 70 with a carrying roller 91, allowing the polymer-coating solution 70 to be coated on the textile 51; evaporating the organic solvent of the polymer-coating solution 70 followed by maturation to form a coated-textile 50 with coating a polymer layer 71 on the textile 51.

With references to Fig. 7A and 7B, for the reason that the polymer layer 71 is merely coated on the surface of the textile 51, the strength of the coated-textile 50 cannot be enhanced. Besides, the organic solvent used in the conventional coating processing would extend the processing time to evaporate the organic solvent followed by maturation. Furthermore, part of the organic solvent remaining on the coated-textile 50 may be harmful to health and the environment.

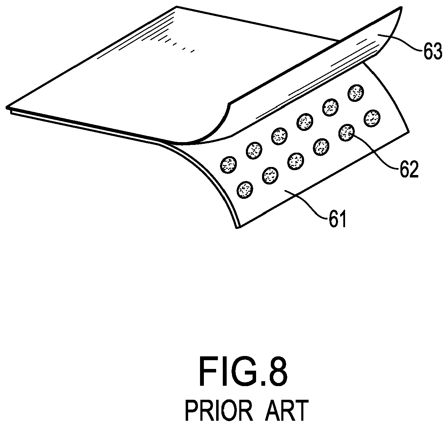

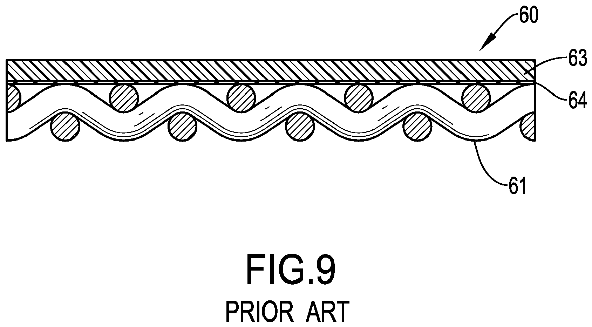

With references to Figs. 8 and 9, a conventional adhesive film processing method comprises: spot-coating a thermosol solution 62 on a surface of a textile 61, wherein the thermosol solution 62 is prepared by dissolving polymers in an organic solvent; sticking a film 63 on the surface of the textile 61 coated with the thermosol solution 62 followed by heating and pressing to form an adhesive film textile 60. The adhesive film textile 60 is composed of the textile 61, a thermosol layer 64 and the film 63, and the thermosol layer 64 is formed by the thermosol solution 62 spot-coated on the surface of the textile 61.

The organic solvent used for dissolving the thermosol solution 62 may remain on the adhesive film textile 60, so the adhesive film textile 60 may be harmful to health and the environment. Besides, combination of the textile 61 and the film 63 is affected by the interaction between the thermosol layer 64 and the textile 61 as well as the film 63. Therefore, the textile 61 and the film 63 of the adhesive film textile 60 will be detached if the adhesion of the thermosol solution 64 decreases after use for a long time.

In addition, the publication number US 2003/194547 A1 discloses a process for producing a composite structure comprising combining at least one first layer that has a first melting point with at least one second layer that has a second melting point lower than the first melting point; and applying heat to the at least one first layer and at least one second layer so that the at least one second layer is at least partially melted to flow around the at least one first layer prior to resolidification to attach the at least one first layer to the at least one second layer. However, the US patent does not disclose any thermal and pressure regulation such as pre-heat temperature, hot-press temperature, or hot-press pressure, and heat and pressure may affect the quality of the composite structure.

The main objective of the invention is to provide a method of producing a composite textile to improve the conventional surface-treatment processing method of the textile without using any organic solvent, and enhance the strength of the treated textile.

The method of producing the composite textile in accordance with the present invention comprises:
providing a fabric layer and a membrane layer, wherein materials of the fabric layer comprise thermoplastic elastomer, thermoplastic polymer or a combination thereof; wherein materials of the membrane layer comprise thermoplastic elastomer, thermoplastic polymer or a combination thereof; wherein the melting point of the fabric layer is higher than that of the membrane layer;
attaching the fabric layer to the membrane layer to form a stacked structure;
heating the stacked structure at a pre-heat temperature, and then heating and pressing the stacked structure at a hot-press temperature and under a hot-press pressure to form a combined structure, wherein the pre-heat temperature and the hot-press temperature are higher than or equal to the melting point of the membrane layer, and the pre-heat temperature and the hot-press temperature are lower than the melting point of the fabric layer, wherein the pre-heat temperature is lower than the hot-pressure temperature, and the hot-press pressure is between 0.1 kg/cm² and 100 kg/cm²; and
cooling the combined structure to obtain a composite textile.

Organic solvents are not used in the method of producing the composite textile, therefore, the composite textile would not have any residual organic solvent.

Preferably, the step of providing the fabric layer comprises:
providing the fabric layer, wherein the fabric layer comprises a first fabric layer and a second fabric layer, wherein materials of the first fabric layer comprise thermoplastic elastomer, thermoplastic polymer or a combination thereof; wherein materials of the second fabric layer comprise thermoplastic elastomer, thermoplastic polymer or a combination thereof; the melting points of the first fabric layer and the second fabric layer are higher than the melting point of the membrane layer, and the melting points of the first fabric layer and the second fabric layer are higher than the pre-heat temperature and the hot-press temperature; and
the step of attaching the fabric layer to the membrane layer to form the stacked structure comprises:
   attaching the first fabric layer and the second fabric layer respectively to both surfaces of the membrane layer to obtain the stacked structure.

Alternatively, the step of providing the membrane layer comprises:
providing the membrane layer, wherein the membrane layer comprises a first membrane layer and a second membrane layer, wherein materials of the first membrane layer comprise thermoplastic elastomer, thermoplastic polymer or a combination thereof; wherein materials of the second membrane layer comprise thermoplastic elastomer, thermoplastic polymer or a combination thereof, wherein melting points of the first membrane layer and the second membrane layer are lower than the melting point of the fabric layer, and the pre-heat temperature and the hot-press temperature are higher than or equal to the melting point of the first membrane layer, and the pre-heat temperature and the hot-press temperature are higher than or equal to the melting point of the second membrane layer; and
the step of attaching the fabric layer to the membrane layer to form the stacked structure comprises:
   attaching the first membrane layer and the second membrane layer respectively to both surfaces of the fabric layer to obtain the stacked structure.

Preferably, the step of providing the fabric layer comprises:
weaving the fabric layer with a yarn, wherein materials of the yarn comprise thermoplastic elastomer, thermoplastic polymer or a combination thereof.

More preferably, methods for weaving the yarn to form the fabric layer include, but not limited to knitting, circular weaving, plain weaving or weaving.

Preferably, the step of weaving the yarn to form the fabric layer comprises:
twisting a first sub-yarn and a second sub-yarn to be the yarn, wherein materials of the first sub-yarn include thermoplastic elastomer, thermoplastic polymer or a combination thereof; wherein materials of the second sub-yarn include thermoplastic elastomer, thermoplastic polymer or a combination thereof; and
weaving the yarn to be the fabric layer.

More preferably, the material of the first sub-yarn is thermoplastic polymer, and the material of the second sub-yarn is thermoplastic elastomer; wherein based on the total weight of the yarn, the weight percentage of the second sub-yarn is between 10 wt% and 90 wt%.

Alternatively, the step of providing the fabric layer comprises:
weaving the fabric layer with a first yarn and a second yarn, wherein materials of the first yarn comprise thermoplastic elastomer, thermoplastic polymer or a combination thereof; wherein materials of the second yarn comprise thermoplastic elastomer, thermoplastic polymer or a combination thereof.

Preferably, the material of the fabric layer is the thermoplastic polymer having the hardness between 85A and 90D.

Preferably, the material of the fabric layer is the thermoplastic polymer having the melting point higher than or equal to 160°C and lower than or equal to 300°C.

Preferably, the material of the membrane layer is thermoplastic polymer having the hardness between 10A and 98A.

Preferably, the material of the membrane layer is thermoplastic polymer having the melting point higher than or equal to 50°C and lower than or equal to 150°C.

Preferably, the thermoplastic polymer includes polyethylene terephthalate (PET), polymethylmethacrylate (PMMA), polyvinyl chloride (PVC), nylon, polycarbonate (PC), polytetrafluoroethene (PTFE), polyoxymethylene (POM), polyolefin (POF), polyacrylonitrile (PAN), polystyrene (PS), polysulfone, polyethersulfone, polyurethane (PU), or any combination thereof.

Preferably, the thickness of the membrane layer is larger than or equal to 0.001 mm and smaller than or equal to 1 mm.

Preferably, the hot-press temperature is higher than or equal to 50°C and lower than or equal to 220°C.

Preferably, the thermoplastic elastomer is thermoplastic polyurethanes (TPU), thermoplastic olefin (TPO), thermoplastic polyamine (TPA), styrene-base thermoplastic elastomer (TPS), thermoplastic polyether ester elastomer (TPEE), thermoplastic rubber (TPR) or thermoplastic vulcanizate (TPV).

Preferably, the material of the fabric layer is thermoplastic elastomer, and the material of the membrane layer is thermoplastic elastomer. The hardness and the melting point of the thermoplastic elastomer can be modified by adjusting the ratio of a soft segment and a hard segment of the thermoplastic elastomer. Percentage of the soft segment in the thermoplastic elastomer is between 20% and 80%, and percentage of the hard segment in the thermoplastic elastomer is between 80% and 20%.

More preferably, the material of the fabric layer is the same as that of the membrane layer. For the reason that the fabric layer and the membrane layer comprise the same materials, the fabric layer can bind to the membrane layer more tightly, and the composite textile made by the fabric layer and the membrane layer has better tearing strength.

According to an embodiment, which is not part of the invention a composite textile, and the composite textile comprises:
a first fabric layer, wherein materials of the first fabric layer comprise thermoplastic elastomer, thermoplastic polymer or a combination thereof; wherein the first fabric layer comprises a first surface, a second surface and multiple pores; wherein the multiple pores are distributed on the first fabric layer and connect the first surface and the second surface; and
a first membrane layer, wherein materials of the first membrane layer comprise thermoplastic elastomer, thermoplastic polymer or a combination thereof, and the melting point of the first membrane layer is lower than the melting point of the first fabric layer; wherein the first membrane layer comprises a third surface and a fourth surface, and the fourth surface of the first membrane layer is attached to the first surface of the first fabric layer, and parts of the fourth surface of the first membrane layer permeate into the multiple pores of the first fabric layer.

The fourth surface of the first membrane layer attached to the first surface of the first fabric layer, and parts of the fourth surface of the first membrane layer permeating into the multiple pores of the first fabric layer allow the first membrane layer to bind with the first fabric layer tightly, and enhance the strength of the composite textile.

Preferably, the composite textile further comprises a second fabric layer; wherein materials of the second fabric layer comprise thermoplastic elastomer, thermoplastic polymer or a combination thereof. The melting point of the second fabric layer is higher than that of the first membrane layer. The second fabric layer comprises a fifth surface, a sixth surface and multiple pores. The multiple pores are distributed on the second fabric layer and connect the fifth surface and the sixth surface. The third surface of the first membrane layer is attached to the fifth surface of the second fabric layer, and parts of the third surface of the first membrane layer permeate into the multiple pores of the second fabric layer.

Preferably, the composite textile further comprises a second membrane layer; wherein materials of the second membrane layer comprise thermoplastic elastomer, thermoplastic polymer or a combination thereof; wherein the melting point of the second membrane layer is lower than that of the first fabric layer; wherein the second membrane layer comprises a third surface and a fourth surface, and the fourth surface of the second membrane layer is attached to the second surface of the first fabric layer, and parts of the fourth surface of the second membrane layer permeate into the multiple pores of the first fabric layer.

Preferably, the material of the first fabric layer is thermoplastic polymer having the hardness between 85A and 90D.

Preferably, the material of the first fabric layer is thermoplastic polymer having the melting point higher than or equal to 160°C and lower than or equal to 300°C.

Preferably, the material of the first membrane layer is thermoplastic polymer having the hardness between 10A and 98A.

Preferably, the material of the first membrane layer is thermoplastic polymer having the melting point of the thermoplastic polymer higher than or equal to 50°C and lower than or equal to 150°C.

Preferably, the thickness of the first membrane layer is larger than or equal to 0.001 mm and smaller than or equal to 1 mm.

Preferably, the material of the first fabric layer is thermoplastic elastomer, and the material of the first membrane layer is thermoplastic elastomer.

Other objectives, advantages and novel features of the invention will become more apparent from the following detailed description when taken in conjunction with the accompanying drawings.

### In the drawings:

Fig. 1 is a perspective view of combination of a fabric layer and a membrane layer of Example 1 in accordance with the present invention;
Fig. 2 is a cross section view of a stacked structure in Example 1;
Fig. 3 is a cross section view of a composite textile in Example 1;
Fig. 4 is a perspective view of combination of a fabric layer and a membrane layer of Example 6 in accordance with the present invention;
Fig. 5 is a perspective view of combination of a fabric layer and a membrane layer of Example 8 in accordance with the present invention;
Fig. 6 shows processing of the conventional coated textile;
Fig. 7A is a perspective view of the coated textile in Fig. 6;
Fig. 7B is an enlarged view of the polymer layer coated on the surface of the textile in Fig. 6.
Fig. 8 shows processing of the conventional adhesive film textile; and
Fig. 9 is a perspective view of the adhesive film textile in Fig. 8.

### Example 1: Preparation of a composite textile

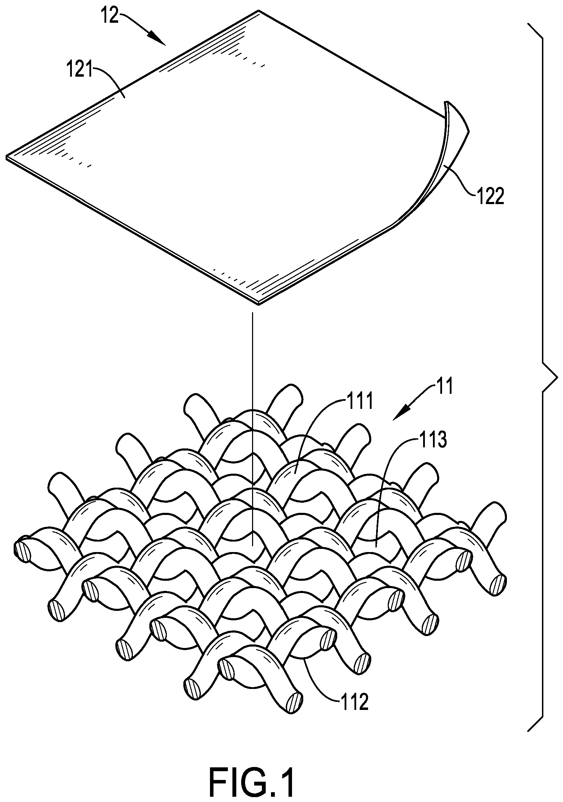

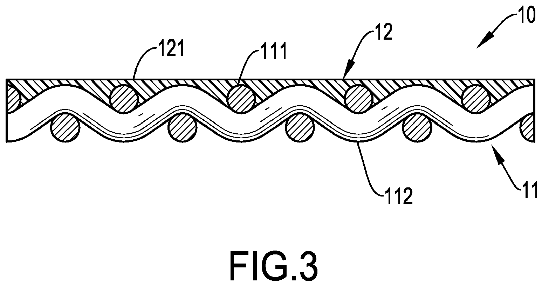

With references to Figs. 1 and 3, a method of producing a composite textile in accordance with the present invention was shown as follows.

Thermoplastic polyurethane with 85A hardness, 60:40 soft-segment/hard-segment ratio, 180°C melting point and 50,000 Da to 100,000 Da molecular weight was spun to form a yarn (300D/72F), and the yarn was tatted to form a fabric layer 11 with a size of 21 cm × 30 cm. The fabric layer 11 comprised a first surface 111, a second surface 112, and multiple pores 113. The first surface 111 was opposite to the second surface 112. The multiple pores 113 were distributed on the fabric layer 11, and each of the multiple pores 113 connected the first surface 111 and the second surface 112. Thermoplastic polyurethane with 98A hardness, 45:55 soft-segment/hard-segment ratio, 60°C melting point and 5,000 Da to 10,000 Da molecular weight was pressed out to form a membrane layer 12 by use of a film extrusion process. The membrane layer 12 was a plane with continuous phases, and a size of the membrane layer 12 was 21 cm × 30 cm, and the thickness of the membrane layer 12 was 0.025 mm. The membrane layer 12 comprised a third surface 121 and a fourth surface 122, and the third surface 121 was opposite to the fourth surface 122.

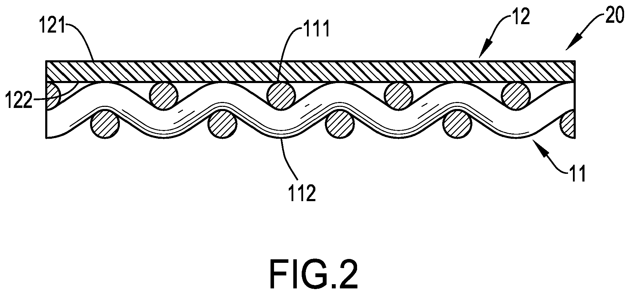

With reference to Fig. 2, the first surface 111 of the fabric layer 11 was attached to the fourth surface 122 of the membrane layer 12 to form a stacked structure 20. The stacked structure 20 was consisted of the fabric layer 11 and the membrane layer 12. The stacked structure 20 had an upper surface and a lower surface. The upper surface of the stacked structure 20 was the third surface 121 of the membrane layer 12, and the lower surface of the stacked structure 20 was the second surface 112 of the fabric layer 11. The first surface 111 of the fabric layer 11 was in contact with the fourth surface 122 of the membrane layer 12 to form an interface of the stacked structure 20. The upper surface and the lower surface of the stacked structure 20 were pre-heated at 60°C for 30 minutes, and then the upper surface and the lower surface of the stacked structure 20 were hot-pressed at 70°C hot-press temperature under 5 kg/cm² hot-press pressure for 5 minutes to form a combined structure. The combined structure was cooled down to room temperature to form a composite textile 10 (Fig. 3).

For the reason that the pre-heated temperature was equal to the melting point of the thermoplastic polyurethane during pre-heating and hot-pressing processes of the stacked structure 20, and the hot-press temperature was a little higher than the melting point of the thermoplastic polyurethane, the fourth surface 122 of the membrane layer 12 was in the molten state, allowing the fourth surface 122 of the membrane layer 12 to penetrate from the first surface 111 of the fabric layer 11 into the multiple pores 113 of the fabric layer 11 to form the combined structure. In other words, the interface clearly existed in the stacked structure 20 before pre-heating and pre-pressing processes; however, the interface between the membrane layer 12 and the fabric layer 11 was unobvious after pre-heating and pre-pressing the stacked structure 20. After cooling the combined structure to form the composite textile 10, the membrane layer 12 was able to bind with the fabric layer 11 tightly by penetrating parts of the membrane layer 12 into the multiple pores 113 of the fabric layer 11.

After hot-pressing, the combined structure had an upper surface and a lower surface. The upper surface of the combined structure was the third surface 121 of the membrane layer 12, and the lower surface of the combined structure was the second surface 112 of the fabric layer 11. As mentioned above, an interface of the combined structure positioned between the first surface 111 of the fabric layer 11 and the fourth surface 122 of the membrane layer 12 was unobvious.

With references to Figs. 1 and 3, the composite textile comprised the fabric layer 11 and the membrane layer 12. The fabric layer 11 had the first surface 111, the second surface 112, and the multiple pores 113. The first surface 111 was opposite to the second surface 112, and the multiple pores 113 were distributed on the fabric layer 11, and each of the multiple pores 113 connected the first surface 111 and the second surface 112. The membrane layer 12 had the third surface 121 and the fourth surface 122, and the third surface 121 was opposite to the fourth surface 122. The fourth surface 122 of the membrane layer 12 was attached to the first layer 111 of the fabric layer 11, and parts of the fourth surface 122 of the membrane layer 12 penetrated into the multiple pores 113 of the fabric layer 11. In other words, an interface of the composite textile 10 positioned between the fabric layer 11 and the membrane layer 12 was unobvious.

The method of producing the composite textile 10 was performed by use of the fabric layer 11 and the membrane layer 12 respectively having specific melting points under pre-heating, hot-pressing and cooling processes. No organic solvent was used in the method; therefore, the problem of residual organic solvents in the composite textile 10 was avoided, and the period of waiting for evaporating the organic solvents and maturation could be saved.

### Example 2: Preparation of a composite textile

A method of producing a composite textile in Example 2 was similar to that in Example 1. The differences between Example 2 and Example 1 were shown as follows. Thermoplastic olefin having 60D hardness, 35:65 soft-segment/hard-segment ratio, 150°C melting point and 60,000 Da to 80,000 Da molecular weight, as well as polypropylene having melting point 170°C and 300,000 Da to 400,000 Da were used in Example 2. The thermoplastic olefin was mixed with the polypropylene at a weight ratio of 1:2 to form a first polymer blend. The melting point of the first polymer blend was 160°C. The first polymer blend was spun to form a yarn (450D/144F), and then the yarn was tatted to form the fabric layer. Thermoplastic olefin with 80A hardness, 65:35 soft-segment/hard-segment ratio, 90°C melting point, and 30,000 Da to 50,000 Da molecular weight was pressed by a film extrusion process to form the membrane layer. The thickness of the membrane layer was 0.025 mm, and the pre-heat temperature, the hot-press temperature, and the hot-press pressure were respectively 90°C, 100°C and 5 kg/cm².

### Example 3: Preparation of a composite textile

A method of producing a composite textile in Example 3 was similar to that in Example 1. The differences between Example 3 and Example 1 were shown as follows. Thermoplastic polyamine having 60D hardness, 33:67 soft-segment/hard-segment ratio, 200°C melting point and 30,000 Da to 50,000 Da molecular weight was spun to form a first sub-yarn (150D/24F). Nylon 6 with melting point 255°C and 20,000 Da to 40,000 Da molecular weight was spun to form a second sub-yarn (150D/24F). A yarn (450D/72F) was formed by twisting the first sub-yarn with the second sub-yarn at a number ratio of 2:1. The yarn was tatted to form the fabric layer. Thermoplastic polyamine with 50D hardness, 40:60 soft-segment/hard-segment ratio, 130°C melting point, and 10,000 Da to 20,000 Da molecular weight was pressed by a film extrusion process to form the membrane layer. The thickness of the membrane layer was 0.025 mm, and the pre-heat temperature, the hot-press temperature, and the hot-press pressure were respectively 130°C, 140°C and 5 kg/cm².

### Example 4: Preparation of a composite textile

A method of producing a composite textile in Example 4 was similar to that in Example 1. The differences between Example 4 and Example 1 were shown as follows. The yarn comprises a first yarn and a second yarn. The first yarn (150D/24F) was formed by spinning polyethylene terephthalate (PET) with 260°C melting point and 20,000 Da to 25,000 Da. The second yarn (150D/24F) was formed by spinning nylon 66 with 265°C melting temperature and 20,000 Da to 30,000 Da. The first yarn was tatted with the second yarn at a number ratio of 1:2 to from the fabric layer. Thermoplastic polyether ester elastomer having 35D hardness, 47:53 soft-segment/hard-segment ratio, 150°C melting point and 30,000 Da to 40,000 Da molecular weight was pressed by a film extrusion process to form the membrane layer. The thickness of the membrane layer was 0.025 mm, and the pre-heat temperature, the hot-press temperature, and the hot-press pressure were respectively 150°C, 160°C and 10 kg/cm².

### Example 5: Preparation of a composite textile

A method of producing a composite textile in Example 5 was similar to that in Example 1. The differences between Example 5 and Example 1 were shown as follows. The yarn (300D/72F) was formed by spinning polyethylene terephthalate with 260°C melting point and 20,000 Da to 25,000 Da, and the yarn was tatted to from the fabric layer. Thermoplastic polyurethane having 98A hardness and 45:55 soft-segment/hard-segment ratio was mixed with thermoplastic olefin having 80A hardness and 65:35 soft-segment/hard-segment ratio at a weight ratio 1:2 to form a second polymer blend. The melting point and thickness of the second polymer blend were respectively 90°C and 90A hardness. The second polymer blend was pressed by a film extrusion process to form the membrane layer. The thickness of the membrane layer was 0.025 mm, the pre-heat temperature, the hot-press temperature, and the hot-press pressure were respectively 90°C, 100°C and 5 kg/cm².

### Example 6: Preparation of a composite textile

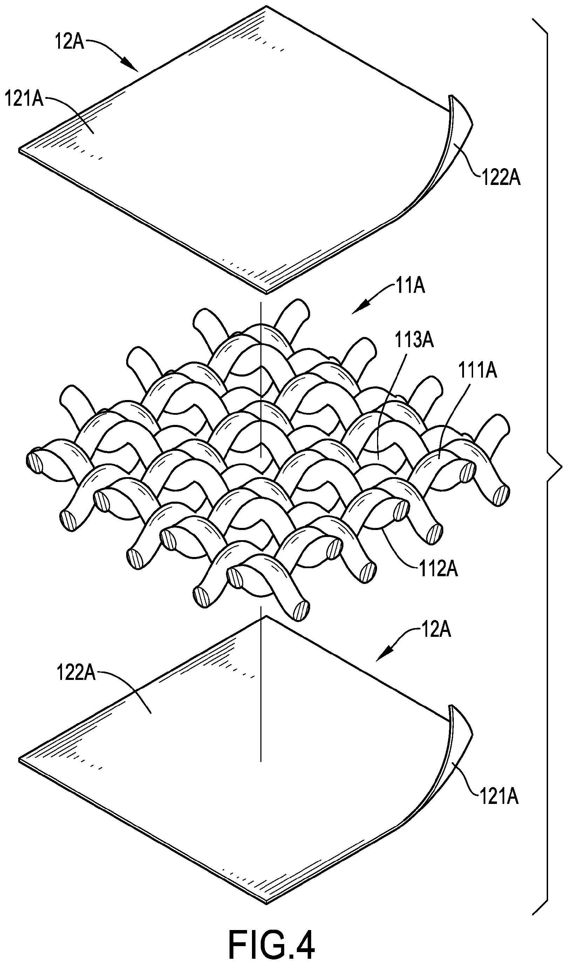

With references to Fig.4, a method of producing a composite textile in accordance with the present invention was shown as follows.

Polyethylene terephthalate with 260°C melting point and 20,000 Da to 25,000 Da molecular weight was spun to form a yarn (150D/72F), and the yarn was tatted to form a fabric layer 11A with a size of 21 cm × 30 cm. The fabric layer 11 comprised a first surface 111A, a second surface 112A, and multiple pores 113A. The first surface 111A was opposite to the second surface 112A of the fabric layer 11A, and the multiple pores 113A were distributed on the fabric layer 11A, and each of the multiple pores 113A connected the first surface 111A and the second surface 112A. Thermoplastic polyurethane with 98A hardness, 45:55 soft-segment/hard-segment ratio, 60°C melting point and 5,000 Da to 10,000 Da molecular weight was pressed by use of a film extrusion process to be two membrane layers 12A. The two membrane layers 12A comprised a first membrane layer and a second membrane layer. Sizes of the first membrane layer and the second membrane layer were 21 cm × 30 cm, and the thicknesses of the first membrane layer and the second membrane layer were both 0.015 mm. The first membrane layer and the second membrane layer of the two membrane layers 12A comprised a third surface 121A and a fourth surface 122A, and the third surface 121A was opposite to the fourth surface 122A.

The fourth surfaces 121A of the two membrane layers 12A were respectively attached to the first surface 111A and the second surface 112A of the fabric layer 11A to form a stacked structure. The stacked structure had an upper surface and a lower surface. The upper surface and the lower surface of the stacked structure were respectively the third surface 121A of each of the member layers 12A. The fourth surfaces 122A of the two membrane layers 12A were respectively in contact with the first surface 111A and the second surface 112A of the fabric layer 11A to respectively form a first interface and a second interface of the stacked structure. The upper surface and the lower surface of the stacked structure were pre-heated at 50°C for 30 minutes, and then the upper surface and the lower surface of the stacked structure were hot-pressed at 60°C hot-press temperature under 20 kg/cm² hot-press pressure for 5 minutes to form a combined structure. The combined structure was cooled down to room temperature to form a composite textile.

For the reason that the pre-heated temperature was equal to the melting point of the thermoplastic polyurethane during pre-heating of the stacked structure and the hot-press temperature was a little higher than the melting point of the thermoplastic polyurethane during hot-pressing processes of the stacked structure, the fourth surfaces 122A of the two membrane layers 12A were in the molten state, allowing the fourth surfaces 122A of the two membrane layers 12A respectively to penetrate from the first surface 111A and the second surface 112A of the fabric layer 11A into the multiple pores 113 of the fabric layer 11. In other words, the first interface and the second interface clearly existed in the stacked structure before pre-heating and pre-pressing processes; however, the interfaces between each of the two membrane layers 12A and the fabric layer 11A were unobvious after pre-heating and pre-pressing the stacked structure. After cooling the combined structure to form the composite textile 10, each of the two membrane layers 12A was able to bind with the fabric layer 11A tightly by penetrating parts of the two membrane layers 12A into the multiple pores 113A of the fabric layer 11A.

The combined structure had an upper surface and a lower surface. The upper surface and the lower surface of the combined structure were respectively the third surface 121A of the two membrane layers 12A. The first interface and the second interface of the combined structure were respectively formed between each of the fourth surface 122A of the membrane layers 12A and the first surface 111A and the second surface 112A of the combined structure. As mentioned above, the first interface and the second interface of the combined structure were unobvious.

The composite textile comprised the fabric layer 11A and the two membrane layers 12A. The fabric layer 11A had the first surface 111A, the second surface 112A, and the multiple pores 113A. The first surface 111A was opposite to the second surface 112A, and the multiple pores 113A were distributed on the fabric layer 11A, and each of the multiple pores 113A connected the first surface 111A and the second surface 112A. The membrane layers 12A respectively had the third surface 121A and the fourth surface 122A, and the third surface 121A was opposite to the fourth surface 122A. The fourth surfaces 122A of the two membrane layers 12A were respectively attached to the first layer 111A and the second layer 112A of the fabric layer 11A, and parts of the fourth surface 122A of the two membrane layers 12A penetrated into the multiple pores 113A of the fabric layer 11A. In other words, an interface of the composite textile positioned between the fabric layer 11A and the two membrane layers 12A was unobvious.

### Example 7: Preparation of a composite textile

A method of producing a composite textile in Example 7 was similar to that in Example 6. The differences between Example 7 and Example 6 were shown as follows. Thermoplastic polyurethane with 50D hardness, 50:50 soft-segment/hard-segment ratio, 190°C melting point and 50,000 Da to 100,000 Da molecular weight was spun to form a yarn (300D/36F), and the yarn was knitted to be the fabric layer. The thermoplastic polyurethane with 90A hardness, 57:43 soft-segment/hard-segment ratio, 85°C melting point, and 10,000 Da to 20,000 Da molecular weight was pressed by a film extrusion process to form the membrane layer. The thickness of the membrane layer was 0.01 mm, and the pre-heat temperature, the hot-press temperature, and the hot-press pressure were respectively 85°C, 100°C and 5 kg/cm².

### Example 8: Preparation of a composite textile

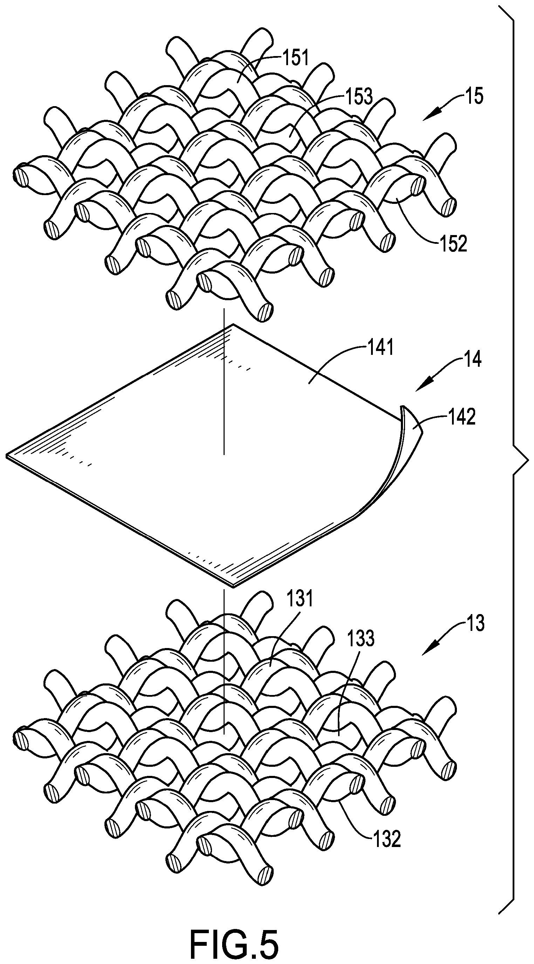

With references to Fig.5, a method of producing a composite textile in accordance with the present invention was shown as follows.

Nylon 66 with 260°C melting point and 20,000 Da to 25,000 Da molecular weight was spun to form a first yarn (150D/24F), and the first yarn was knitted to form a first fabric layer 13 with a size of 21 cm × 30 cm. The first fabric layer 13 comprised a first surface 131, a second surface 132, and multiple pores 133. The first surface 131 was opposite to the second surface 132 of the first fabric layer 13, and the multiple pores 133 were distributed on the fabric layer 13, and each of the multiple pores 133 connected the first surface 131 and the second surface 132. Thermoplastic polyurethane with 98A hardness, 45:55 soft-segment/hard-segment ratio, 60°C melting point and 5,000 Da to 10,000 Da molecular weight was pressed by use of a film extrusion process to form a membrane layer 14. A size of the membrane layer 14 was 21 cm × 30 cm, and the thickness of the membrane layer 14 was 0.025 mm. The membrane layer 14 comprised a third surface 141 and a fourth surface 142, and the third surface 141 was opposite to the fourth surface 142. Thermoplastic polyurethane with 95A hardness, 53:47 soft-segment/hard-segment ratio, 180°C melting point and 50,000 Da to 80,000 Da molecular weight was spun to form a second yarn, and the second yarn was knitted to form a second fabric layer 15 with a size of 21 cm × 30 cm. The second fabric layer 15 comprised a fifth surface 151, a sixth surface 152, and multiple pores 153. The fifth surface 151 was opposite to the sixth surface 152 of the second fabric layer 15, and the multiple pores 153 were distributed on the second fabric layer 15, and each of the multiple pores 153 connected the fifth surface 151 and the sixth surface 152.

The first surface 131 of the first fabric layer 13 and the sixth surface 152 of the second fabric layer 15 were respectively attached to the third surface 141 and the fourth surface 142 of the membrane layer 14 to form a stacked structure. The stacked structure was consisted of the first fabric layer 13, the second fabric layer 15 and the membrane layer 14. The stacked structure had an upper surface and a lower surface. The upper surface of the stacked structure was the fifth surface 151 of the second fabric layer 15; the lower surface of the stacked structure was the second surface 132 of the first fabric layer 13. The first surface 131 of the first fabric layer 13 was in contact with the fourth surface 142 of the membrane layer 14 to form a first interface of the stacked structure. The sixth surface 152 of the second fabric layer 15 was in contact with the third surface 141 of the membrane layer 14 to form a second interface of the stacked structure. The upper surface and the lower surface of the stacked structure were pre-heated at 60°C for 30 minutes, and then the upper surface and the lower surface of the stacked structure were hot-pressed at 80°C hot-press temperature under 50 kg/cm² hot-press pressure for 5 minutes to form a combined structure. The combined structure was cooled down to room temperature to form a composite textile.

For the reason that the pre-heated temperature was equal to the melting point of the thermoplastic polyurethane during pre-heating of the stacked structure and the hot press temperature was a little higher than the melting point of the thermoplastic polyurethane during hot-pressing processes of the stacked structure, the third surface 141 and the fourth surface 142 of the membrane layerl4 were in the molten state, allowing the third surface 141 and the fourth surface 142 of the membrane layer14 respectively to be penetrated from the third surface 141 and the fourth surface 142 of the membrane layer 14 into the multiple pores 133 of the first fabric layer 13 and the multiple pores 153 of the second fabric layer 15. In other words, the first interface and the second interface clearly existed in the stacked structure before pre-heating and pre-pressing processes; however, the interfaces between the membrane layer14 and the first fabric layer 13, as well as between the membrane layer 14 and the second fabric layer 15 were unobvious after pre-heating and pre-pressing the stacked structure. After cooling the combined structure to form the composite textile 10, the membrane layer 14 was able to bind with the first fabric layer 13 and the second fabric layer 15 tightly by penetrating parts of the membrane layer 14 into the multiple pores 133 of the first fabric layer 13 and the multiple pores 153 of the second fabric layer 15.

The combined structure had an upper surface and a lower surface. The upper surface and the lower surface of the combined structure were respectively the fifth surface 151 of the second fabric layer 15 and the second surface 132 of the first fabric layer 13. The first interface was formed between the first surface 131 of the first fabric layer 13 and the fourth surface 142 of the membrane layer 14. The second interface of the combined structure was formed between the sixth surface 152 of the second fabric layer 15 and the third surface 141 of the membrane layer 14. As mentioned above, the first interface and the second interface of the combined structure were unobvious.

The composite textile comprised the first fabric layer 13, the second fabric layer 15, and the membrane layer 14. The first fabric layer 13 had the first surface 131, the second surface 132, and the multiple pores 133. The first surface 131 was opposite to the second surface 132, and the multiple pores 133 were distributed on the first fabric layer 13, and each of the multiple pores 133 connected the first surface 131 and the second surface 132 of the first fabric layer 13. The membrane layer 14 had the third surface 141 and the fourth surface 142, and the third surface 141 was opposite to the fourth surface 142. The second fabric layer 15 had the fifth surface 151, the sixth surface 152, and the multiple pores 153. The fifth surface 151 was opposite to the sixth surface 152, and the multiple pores 153 were distributed on the second fabric layer 15, and each of the multiple pores 153 connected the fifth surface 151 and the sixth surface 152 of the second fabric layer 15. The third surface 141 and the fourth surface 142 of the membrane layer 14 were respectively attached to the sixth surface 152 of the second fabric layer 15 and the first surface 131 of the first fabric layer 13, and parts of the third surface 141 and the fourth surface 142 of the membrane layer 14 penetrated into the multiple pores 133, 153 of the first fabric layer 13 and the second fabric layer 15. In other words, an interface of the composite textile positioned between the first fabric layer 13 and the membrane layer 14 was unobvious.

### Example 9: Preparation of a composite textile

A method of producing a composite textile in Example 9 was similar to that in Example 8. The differences between Example 9 and Example 8 were shown as follows. Thermoplastic polyurethane with 64D hardness, 30:70 soft-segment/hard-segment ratio, 210°C melting point and 80,000 Da to 120,000 Da molecular weight was spun to form a first yarn (150D/36F) and a second yarn (150D/36F) respectively. The first yarn and the second yarn were respectively knitted to be the first fabric layer and the second fabric layer. The thermoplastic polyurethane having 98A hardness and 45:55 soft-segment/hard-segment ratio was mixed with the styrene-base thermoplastic elastomer having 80A hardness and 65:35 soft-segment/hard-segment ratio at a weight ratio of 7:3 to form a fourth polymer blend. The melting point and the hardness of the fourth polymer blend were respectively 65°C and 95A.The fourth polymer blend was pressed by a film extrusion process to form the membrane layer. The thickness of the membrane layer was 0.3 mm, and the pre-heat temperature, the hot-press temperature, and the hot-press pressure were respectively 65°C, 85°C and 30 kg/cm².

### Comparative example 1: Preparation of a coated textile

Polyethylene terephthalate with 260°C melting point and 20,000 Da to 25,000 Da molecular weight was spun to form a yarn (300D/72F), and the yarn was tatted to form a textile with a size of 21 cm × 30 cm. Thermoplastic polyurethane with 64D hardness, 30:70 soft-segment/hard-segment ratio, 210°C melting point and 80,000 Da to 120,000 Da molecular weight was dissolved in butanone to form a polymer-coating solution. The polymer-coating solution was coated on the textile, and the textile was baked in the oven for 1 hour. The baked textile was cooled down to room temperature to form a coated textile.

### Comparative example 2: Preparation of an adhesive film textile

Polyethylene terephthalate with 260°C melting point and 20,000 Da to 25,000 Da molecular weight was spun to form a yarn (300D/72F), and the yarn was tatted to form a textile with a size of 21 cm × 30 cm. A melted glue solution (comprising 30% butanone) was prepared. The melted glue solution was spotted on the surface of the textile. A membrane composed of thermoplastic polyurethane with 95A hardness, 53:47 soft-segment/hard-segment ratio, 160°C melting point and 50,000 Da to 80,000 Da molecular weight was attached to the surface of the textile to form a stacked structure. The stacked structure was heated and pressed under 130°C at 1 kg/cm², and then the stacked structure was cooled down to room temperature to form the adhesive film textile.

### Assay 1: Assay of water vapor transmission rate

The composite textiles prepared by Examples 1 to 9, the coated textile prepared by Comparative example 1 and the adhesive film textile prepared by Comparative example 2 were respectively assayed for water vapor transmission rate according to Japanese Industrial Standard L 1099A1 (JIS L 1099A1). Results of the assays were shown in Table 1.

### Assay 2: Assay of pressure tolerance of water

The composite textiles prepared by Examples 1 to 9, the coated textile prepared by Comparative example 1 and the adhesive film textile prepared by Comparative example 2 were respectively assayed for pressure tolerance of water according to Japanese Industrial Standard L 1092 (JIS L 1092). Results of the assays were shown in Table 1.

### Assay 3: Assay of tearing strength

The composite textiles prepared by Examples 1 to 9, the coated textile prepared by Comparative example 1 and the adhesive film textile prepared by Comparative example 2 were respectively assayed for tearing strength according to International Organization for Standardization 13937 (ISO 13937). Results of the assays were shown in Table 1.

**Table 1 The water vapor transmission rate, pressure tolerance of water, and tearing strength of the composite textiles prepared by Examples 1 to 9, the coated textile prepared by Comparative example 1 and the adhesive film textile prepared by Comparative example 2**

| Sample No. | Water vapor transmission rate (g/m²/24 hours) | Pressure tolerance of water (mm H₂O) | Tearing strength | |
|---|---|---|---|---|
| | | | Vertical direction | Cross direction |
| Example 1 | 4,500 | 12,000 | ≥ 50 | ≥ 40 |
| Example 2 | 500 | 12,000 | ≥ 45 | ≥ 40 |
| Example 3 | 1,000 | 15,000 | ≥ 55 | ≥ 45 |
| Example 4 | 6,000 | 10,000 | ≥ 35 | ≥ 30 |
| Example 5 | 1,500 | 10,000 | ≥ 40 | ≥ 30 |
| Example 6 | 2,500 | 15,000 | ≥ 55 | ≥ 45 |
| Example 7 | 2,000 | 15,000 | ≥ 70 | ≥ 60 |
| Example 8 | 4,000 | 10,000 | ≥ 45 | ≥ 35 |
| Example 9 | 3,500 | 10,000 | ≥ 50 | ≥ 40 |
| Comparative example 1 | 1,000 | 3,000 | ≥ 15 | ≥ 10 |
| Comparative example 2 | 3,000 | 6,000 | ≥ 25 | ≥ 20 |

Results showed that the pressure tolerance of water of the composite textiles prepared by Examples 1 to 9 was better than that of the coated textile prepared by Comparative example 1 and the adhesive film textile prepared by Comparative example 2. The reason was that the composite textiles prepared by Examples 1 to 9 had completed structure to provide better pressure tolerance of water.

The tearing strength of the composite textiles prepared by Examples 1 to 9 was better than that of the coated textile prepared by Comparative example 1 and the adhesive film textile prepared by Comparative example 2. The reason was that stronger binding strength between the fabric layer and the membrane layer of the composite textiles prepared by Examples 1 to 9 could provide better tearing strength.

As comparing Examples 1 to 5, the composite textiles prepared by Examples 1 to 3 had better tearing strength than those prepared by Examples 4 and 5. The reason was that the same materials prepared for the fabric layer and the membrane layer could provide stronger binding strength between the fabric layer and the membrane layer.

As comparing Examples 1 to 7, the composite textiles prepared by Examples 6 and 7 had bi-membrane layers which were thicker than a single membrane layer, and the bi-membrane layers had better adhesive character to the fabric layer. Therefore, the composite textiles prepared by Examples 6 and 7 had better pressure tolerance of water and tearing strength than those prepared by Examples 1 to 5. Besides, as comparing Example 6 to 7, the composite textiles prepared by Example 6 had better tearing strength than that prepared by Example 7. The reason was that the composite textile prepared by Example 7 had the same materials prepared for the fabric layer and the membrane layer which could provide stronger binding strength between the fabric layer and the membrane layer.

## Claims

1. A method of producing a composite textile comprising:
providing a fabric layer (11) and a membrane layer (12), wherein materials of the fabric layer (11) comprise thermoplastic elastomer, thermoplastic or a combination thereof; wherein materials of the membrane layer (12) comprise thermoplastic elastomer, thermoplastic or a combination thereof; wherein the melting point of the fabric layer (11) is higher than the melting point of the membrane layer (12);
attaching the fabric layer (11) to the membrane layer (12) to form a stacked structure (20);**characterized in that** the method comprises heating the stacked structure (20) at a pre-heat temperature, and then heating and pressing the stacked structure (20) at a hot-press temperature and under a hot-press pressure to form a combined structure, wherein the pre-heat temperature and the hot-press temperature are higher than or equal to the melting point of the membrane layer (12), and the pre-heat temperature and the hot-press temperature are lower than the melting point of the fabric layer (11), wherein the pre-heat temperature is lower than the hot-pressure temperature, and the hot-press pressure is between 0.1 kg/cm² and 100 kg/cm²; and
cooling the combined structure to obtain a composite textile (10).

2. The method as claimed in claim 1, wherein the step of providing the fabric layer (11) comprises:
providing the fabric layer (11), wherein the fabric layer (11) comprises a first fabric layer (13) and a second fabric layer (15), wherein materials of the first fabric layer (13) comprise thermoplastic elastomer, thermoplastic or a combination thereof; materials of the second fabric layer (15) comprise thermoplastic elastomer, thermoplastic or a combination thereof; wherein the melting points of the first fabric layer (13) and the second fabric layer (15) are higher than the melting point of the membrane layer (12), and the melting points of the first fabric layer (13) and the second fabric layer (15) are higher than the pre-heat temperature and the hot-press temperature; and
the step of attaching the fabric layer (11) to the membrane layer (12) to form the stacked structure (20) comprises:
attaching the first fabric layer (13) and the second fabric layer (15) respectively to both surfaces of the membrane layer (14) to obtain the stacked structure (20).

3. The method as claimed in claim 1, wherein the step of providing the membrane layer (12A) comprises:
providing the membrane layer (12A), wherein the membrane layer (12A) comprises a first membrane layer and a second membrane layer, wherein materials of the first membrane layer comprise thermoplastic elastomer, thermoplastic or a combination thereof; wherein materials of the second membrane layer comprise thermoplastic elastomer, thermoplastic or a combination thereof, wherein the melting points of the first membrane layer and the second membrane layer are lower than the melting point of the fabric layer, and the pre-heat temperature and the hot-press temperature are higher than or equal to the melting point of the first membrane layer, and the pre-heat temperature and the hot-press temperature are higher than or equal to the melting point of the second membrane layer; and
the step of attaching the fabric layer (11A) to the membrane layer (12A) to form the stacked structure (20) comprises:
attaching the first membrane layer and the second membrane layer respectively to both surfaces (111A, 112A) of the fabric layer (11A) to obtain the stacked structure (20).

4. The method as claimed in claim 1, wherein the material of the fabric layer (11) is thermoplastic with the hardness between 85A and 90D and the melting point higher than or equal to 160°C and lower than or equal to 300°C; wherein the material of the membrane layer (12) is thermoplastic with the hardness between 10A and 98A and the melting point higher than or equal to 50°C and lower than or equal to 150°C.

5. The method as claimed in claim 1, wherein the hot-press temperature is higher than or equal to 50°C and lower than or equal to 220°C.

6. The method as claimed in claim 1, wherein the material of the fabric layer is thermoplastic, and the material of the membrane layer (12) is thermoplastic elastomer.

## Patentansprüche

1. Verfahren zur Herstellung eines Verbundtextils, umfassend:
Bereitstellen einer Gewebeschicht (11) und einer Membranschicht (12), wobei Materialien der Gewebeschicht (11) ein thermoplastisches Elastomer, einen Thermoplasten oder eine Kombination davon umfassen, wobei Materialien der Membranschicht (12) ein thermoplastisches Elastomer, einen Thermoplasten oder eine Kombination davon umfassen, wobei der Schmelzpunkt der Gewebeschicht (11) höher als der Schmelzpunkt der Membranschicht (12) ist, Anbringen der Gewebeschicht (11) an der Membranschicht (12), um eine Stapelstruktur (20) auszubilden, **dadurch gekennzeichnet, dass** das Verfahren ein Erhitzen der Stapelstruktur (20) bei einer Vorheiztemperatur und dann ein Erhitzen und ein Pressen der Stapelstruktur (20) bei einer Heißpresstemperatur und unter einem Heißpressdruck, um eine Kombinationsstruktur auszubilden, umfasst, wobei die Vorheiztemperatur und die Heißpresstemperatur höher als oder gleich dem Schmelzpunkt der Membranschicht (12) sind, und die Vorheiztemperatur und die Heißpresstemperatur niedriger als der Schmelzpunkt der Gewebeschicht (11) sind, wobei die Vorheiztemperatur niedriger als die Heißpresstemperatur ist und der Heißpressdruck zwischen 0,1 kg/cm² und 100 kg/cm² liegt, und Kühlen der kombinierten Struktur, um ein Verbundtextil (10) zu erhalten.

2. Verfahren nach Anspruch 1, wobei der Schritt des Bereitstellens der Gewebeschicht (11) umfasst:
Bereitstellen der Gewebeschicht (11), wobei die Gewebeschicht (11) eine erste Gewebeschicht (13) und eine zweite Gewebeschicht (15) umfasst, wobei Materialien der ersten Gewebeschicht (13) ein thermoplastisches Elastomer, einen Thermoplasten oder eine Kombination davon umfassen, Materialien der zweiten Gewebeschicht (15) ein thermoplastisches Elastomer, einen Thermoplasten oder eine Kombination davon umfassen, wobei die Schmelzpunkte der ersten Gewebeschicht (13) und der zweiten Gewebeschicht (15) höher als der Schmelzpunkt der Membranschicht (12) sind und die Schmelzpunkte der ersten Gewebeschicht (13) und der zweiten Gewebeschicht (15) höher als die Vorheiztemperatur und die Heißpresstemperatur sind, und
der Schritt des Anbringens der Gewebeschicht (11) an der Membranschicht (12) zur Ausbildung der Stapelstruktur (20) umfasst:
Anbringen der ersten Gewebeschicht (13) und der zweiten Gewebeschicht (15) jeweils an beiden Oberflächen der Membranschicht (14), um die Stapelstruktur (20) zu erhalten.

3. Verfahren nach Anspruch 1, wobei der Schritt des Bereitstellens der Membranschicht (12A) umfasst:
Bereitstellen der Membranschicht (12A), wobei die Membranschicht (12A) eine erste Membranschicht und eine zweite Membranschicht umfasst, wobei Materialien der ersten Membranschicht ein thermoplastisches Elastomer, einen Thermoplasten oder eine Kombination davon umfassen, wobei Materialien der zweiten Membranschicht ein thermoplastisches Elastomer, einen Thermoplasten oder eine Kombination davon umfassen, wobei die Schmelzpunkte der ersten Membranschicht und der zweiten Membranschicht niedriger sind als der Schmelzpunkt der Gewebeschicht, und die Vorwärmtemperatur und die Heißpresstemperatur höher oder gleich dem Schmelzpunkt der ersten Membranschicht sind, und die Vorheiztemperatur und die Heißpresstemperatur höher oder gleich dem Schmelzpunkt der zweiten Membranschicht sind, und
der Schritt des Anbringens der Gewebeschicht (11A) an der Membranschicht (12A) zum Ausbilden der Stapelstruktur (20) umfasst:
Anbringen der ersten Membranschicht und der zweiten Membranschicht jeweils an beiden Oberflächen (111A, 112A) der Gewebeschicht (11A), um die Stapelstruktur (20) zu erhalten.

4. Verfahren nach Anspruch 1, wobei das Material der Gewebeschicht (11) ein Thermoplast mit einer Härte zwischen 85A und 90D ist und der Schmelzpunkt höher als oder gleich 160°C und niedriger als oder gleich 300°C ist, wobei das Material der Membranschicht (12) ein Thermoplast mit einer Härte zwischen 10A und 98A ist und der Schmelzpunkt höher als oder gleich 50°C und niedriger als oder gleich 150°C ist.

5. Verfahren nach Anspruch 1, wobei die Heißpresstemperatur höher als oder gleich 50°C und niedriger als oder gleich 220°C ist.

6. Verfahren nach Anspruch 1, wobei das Material der Gewebeschicht ein Thermoplast ist und das Material der Membranschicht (12) ein thermoplastisches Elastomer ist.

## Revendications

1. Procédé de fabrication d'un textile composite comprenant :
le fait de prévoir une couche de tissu (11) et une couche de membrane (12), les matériaux de la couche de tissu (11) comprenant un élastomère thermoplastique, un thermoplastique ou une combinaison de ceux-ci ; les matériaux de la couche de membrane (12) comprenant un élastomère thermoplastique, un thermoplastique ou une combinaison de ceux-ci ; le point de fusion de la couche de tissu (11) étant supérieur au point de fusion de la couche de membrane (12) ;
la fixation de la couche de tissu (11) sur la couche de membrane (12) afin de former une structure empilée (20) ; **caractérisé en ce que** le procédé comprend le chauffage de la structure empilée (20) à une température de préchauffage, puis le chauffage et le pressage de la structure empilée (20) à une température de pressage à chaud et sous une pression de pressage à chaud afin de former une structure combinée, dans lequel la température de préchauffage et la température de pressage à chaud sont supérieures ou égales au point de fusion de la couche de membrane (12), et la température de préchauffage et la température de pressage à chaud sont inférieures au point de fusion de la couche de tissu (11), dans lequel la température de préchauffage est inférieure à la température de pressage à chaud, et la pression de pressage à chaud est comprise entre 0,1 kg/cm² et 100 kg/cm² ; et
le refroidissement de la structure combinée afin d'obtenir un textile composite (10).

2. Procédé selon la revendication 1, dans lequel l'étape qui consiste à prévoir la couche de tissu (11) comprend :
le fait de prévoir la couche de tissu (11), la couche de tissu (11) comprenant une première couche de tissu (13) et une seconde couche de tissu (15), les matériaux de la première couche de tissu (13) comprenant un élastomère thermoplastique, un thermoplastique ou une combinaison de ceux-ci ; les matériaux de la seconde couche de tissu (15) comprenant un élastomère thermoplastique, un thermoplastique ou une combinaison de ceux-ci ; les points de fusion de la première couche de tissu (13) et de la seconde couche de tissu (15) étant supérieurs au point de fusion de la couche de membrane (12), et les points de fusion de la première couche de tissu (13) et de la seconde couche de tissu (15) étant supérieurs à la température de préchauffage et à la température de pressage à chaud ; et
l'étape de fixation de la couche de tissu (11) sur la couche de membrane (12) afin de former la structure empilée (20) comprend :
la fixation de la première couche de tissu (13) et de la seconde couche de tissu (15) respectivement sur les deux surfaces de la couche de membrane (14) afin d'obtenir la structure empilée (20).

3. Procédé selon la revendication 1, dans lequel l'étape qui consiste à prévoir la couche de membrane (12A) comprend :
le fait de prévoir la couche de membrane (12A), la couche de membrane (12A) comprenant une première couche de membrane et une seconde couche de membrane, les matériaux de la première couche de membrane comprenant un élastomère thermoplastique, un thermoplastique ou une combinaison de ceux-ci ; les matériaux de la seconde couche de membrane comprenant un élastomère thermoplastique, un thermoplastique ou des combinaisons de ceux-ci, les points de fusion de la première couche de membrane et de la seconde couche de membrane étant inférieurs au point de fusion de la couche de tissu, et la température de préchauffage et la température de pressage à chaud étant supérieures ou égales au point de fusion de la première couche de membrane, et la température de préchauffage et la température de pressage à chaud étant supérieures ou égales au point de fusion de la seconde couche de membrane ; et
l'étape de fixation de la couche de tissu (11A) sur la couche de membrane (12A) afin de former la structure empilée (20) comprend :
la fixation de la première couche de membrane et de la seconde couche de membrane respectivement sur les deux surfaces (111A, 112A) de la couche de tissu (11A) afin d'obtenir la structure empilée (20).

4. Procédé selon la revendication 1, dans lequel le matériau de la couche de tissu (11) est un thermoplastique avec une dureté comprise entre 85A et 90D et un point de fusion supérieur ou égal à 160°C et inférieur ou égal à 300°C ; dans lequel le matériau de la couche de membrane (12) est un thermoplastique avec une dureté comprise entre 10A et 98A et un point de fusion supérieur ou égal à 50°C et inférieur ou égal à 150°C.

5. Procédé selon la revendication 1, dans lequel la température de pressage à chaud est supérieure ou égale à 50°C et inférieure ou égale à 220°C.

6. Procédé selon la revendication 1, dans lequel le matériau de la couche de tissu est un thermoplastique, et le matériau de la couche de membrane (12) est un élastomère thermoplastique.
